# EUROPEAN PATENT APPLICATION

(11) **EP 1 870 834 A1**
(43) Date of publication of application: **26.12.2007**
(21) Application number: 06115738.4
(22) Date of filing: 20.06.2006
(51) Int. Cl.: G06K 7/08

(54) **Support for marked articles and article to be accomodated in such support**

(71) Applicant: Assa Abloy Identification Technology Group AB, 10723 Stockholm (SE)
(72) Inventor: HELD, Philippe, 1802, Corseaux (CH); CURTY, Jari-Pascal, 1260, Nyon (CH); CORBOZ, Mathias, 8005, Zurich (CH)
(74) Representative: Grosfillier, Philippe

(57) **Abstract**

The support (1) has at a least one accommodation position (3) for removably accommodating an article (2) marked with a transponder (12) comprising a transponder chip (13) and an antenna (14,) electrically connected to the chip. Each accommodation position comprises an inductive coupling unit (5) with a primary antenna (6) and a secondary antenna (7) connected in series and wherein the secondary antenna (7) is configured such that, when the accommodation position is accommodated with an article, the secondary antenna (7) is inductive coupled with the antenna (14) of the transponder.

## Description

### Field of the Invention

The invention relates to a support for marked articles and to an article to be accommodated in such support, in particular marked containers, like vials or test tubes, accommodated in a crate or a rack as support.

### State of the art

RFID marking of articles is well known in the art. To permanently mark an article, it is necessary to integrally apply a RFID transponder with a chip and an antenna to said article. The difficulty of such integration depends mainly on the geometry of said article. In addition, geometrical restrictions influence also directly the readability and the general performances of the transponder. This becomes even more critical when a plurality of marked articles are held in close proximity to one another, adding crosstalks, interferences and coupling to the problematic.

Chemistry, biology and pharmaceutical laboratories have been looking for a long time for an adequate solution to mark test tubes or vials as storage containers for containing chemicals or biological assays.

Even before using RFID technology, the main solution chosen to mark electronically a test tube has been to integrate a chip in one of the extremity of the tube, either in the cap or in the bottom. For example, Patent FR2555744 shows a chip with annular contacts cast in a recess or a groove at the rear close end of a test tube.

A known approach is disclosed in W08908264. The chip is provided on the base of a container for blood sample by means of an additional holder. This holder is designed such that it can be attached to the container in the region of the base. This carries a risk that the test tube and the chip holder can become separated from one another so that the blood sample container and its contents are no longer clearly identifiable. There is also the risk of a mix of containers and holders if several are detached at the same time.

A similar approach for RFID transponders is described in EP 0 706 825. The transponder is embedded in a socket made of plastic and this socket is connected to the base of the test tube. The socket and the test tube can be connected by means of adhesive. This solution also involves the making of two separate parts that must be assembled and maintained together.

Most of the time, for storage, transport and handling, a plurality of such articles are held together in a holding structure like a crate or a rack for example. There is some attempts in the art to use such structures for marking purposes.

For example, document DE 44 39 914 shows a concept where the bottles, the crates or even the pallets are each separately marked by transponders. In such a case, the individual readability of a tag fixed on a bottle accommodated in a crate by a reader positioned at some distance of the crate is quite questionable.

Another approach, not using RFID, is disclosed in US 6,270,728. Each test tube is marked on its bottom with an optically readable coding, and the rack to hold the test tubes is fitted with an optical reading mechanism that reads the accommodated test tubes from the bottom. The optical reading mechanism is provided with a microprocessor to allocate the codings which have been read to the accommodation positions in the rack. Here a movable reader has to be integrated in each rack, making this solution quite expensive.

None of these document describes how such an article marked by a RFID transponder in a cheap and simple manner could be easily and effectively read when accommodated with a plurality of other marked articles in a support, like a crate or a rack.

### Summary of the invention

It is therefore an aim of the present invention is to improve the known systems and processes.

A further aim of the invention is to provide a system without reduced performances in readability range and in radio wave sensibility.

It is another aim of the present invention to provide a system that is easy to use and reliable in that it reduces the risk of mixing of marking and articles.

A further aim of the present invention is to provide a system that allows the marking of articles with small transponder, easy to integrate on the article, but without reducing the readability range and other RFID capacities.

A further objective of the present invention is to provide a system that allows to easily and effectively read a plurality of marked articles placed in a support, like a crate or a rack.

An idea of the invention is to use the structure of the support to fit an inductive coupling unit in each of the accommodating position of the support. Each coupling unit comprises a primary antenna, configured for long range communication with an external RFID reader, and a secondary antenna connected in series, wherein the secondary antenna is configured such to be inductive coupled to an antenna of the transponder mounted on the article accommodated in the accommodating position.

Inductive coupling, also called magnetic, capacitive or reactive coupling, is defined in contrast to direct electrical coupling by electrically conductive material. References herein to inductive, magnetic, capacitive or reactive coupling refer to coupling that is predominantly or primarily inductive, magnetic, capacitive or reactive. It will be appreciated that coupling that is primarily inductive may also includes some capacitive coupling. Conversely, coupling that is primarily capacitive may also include some inductive (magnetic) coupling as a secondary coupling mechanism. Systems using primarily magnetic, capacitive or reactive coupling are referred to herein as utilizing inductive coupling.

This technology of inductive coupling unit is known in the art and was first published for RFID transponders in US 5,270,717, as a solution to provide an extended range transponder/antenna configuration. A standard transponder is coupled to a long and narrow antenna by a loosely coupled coil. This document describes the general principle of a inductive coupling unit.

This technology has been extensively used for manufacturing non contact cards. A known approach is disclosed in US 2004/0069856. A transponder unit comprises a chip with an antenna and an inductive coupling unit. All the elements are integrated in the transponder units and aim to extend the range and the quality of the communication of the transponder unit, in particular in the case of a non contact card.

A similar approach for RFID smart card is described in EP 0 931 295. A module is provided with an antenna on the module, and the module is fixed in a recess of the card support accommodated with an inductive coupling unit. The mounting is achieved such that the antenna on the module is inductive coupled with a secondary antenna of the coupling unit.

Another alternative is presented in EP 0 977 145, where an antenna is formed directly on the surface of the chip, when the primary and secondary antennas of the coupling unit are formed on a module board on which the chip is going to be mounted by flip-chip method.

A solution for RFID tags and labels is proposed in US 2006/0044769. It describes a particular solution for the coupling unit with a dipole as primary antenna and single-turn loops for the secondary antenna. It extensively explains that many other suitable configurations are possible for each antenna of the system.

In all the documents of the art cited above, a compact solution with a coupling unit inside of compact transponder unit is proposed. The chip is electrically connected to the larger antenna (the primary antenna of the coupling unit) without physical connection. Such units are much more resistant to mechanical stress than the ones using traditional connecting means as pads, studs or wires. The antenna of the transponder is kept very small (about the size of the chip or of the module) and is mounted on the same rigid structure as the chip. It can be the chip itself or in/on the chip packaging (as a chip module). This kind of very small transponders (chip and antenna together) is called coil-on-chip and are known in the art and largely distributed on the market.

All configurations disclosed above, as also dipole, patch, slot, spiral, wire, single-loop, multi-loops and various hybrid antenna type are suitable for such inductive coupling system. The mechanism for generating the magnetic field in the magnetic coupler may vary based on the antennas type or configuration. All type of coupling, at Low frequency (LF: 30 - 300 kHz), high frequency (HF: 3 - 30 MHz) or ultra high frequency (UHF: over 300 MHz), are possible.

In contrary to the above described embodiments, an idea of the invention is to provide the transponder and the inductive coupling unit on two separate structures: an article and its support.

According to claim 1, the idea is to provide a support with at least one accommodation position for accommodating at least an article marked with a transponder (12), the transponder comprising a transponder chip and an antenna being electrically connected to the chip, wherein each accommodation position comprises an inductive coupling unit, each coupling unit comprising a primary antenna and a secondary antenna connected in series and wherein the secondary antenna is configured such that, when the accommodation position is accommodated with an article, the secondary antenna is inductive coupled with the antenna of the transponder of the article. The corresponding claim 7 defines an article to be accommodated in such support.

One advantage of the proposed solution is that the transponder mounted on the article, in particular the antenna, can be kept small, without regard to its readability range, and is therefore very easy to integrate on the article. One of the preferred embodiment of the invention is an article marked by a coil-on-chip transponder, where the chip and the antenna are integrated in a small compact structure.

Another advantage of the invention is to provide a support that comprises the antenna part dedicated to communicate with external reader (the primary antenna), but that contains no chip. This makes the manufacture of the support itself easy and cheap, once the proper design of the coupling units in the support is defined in regards to the proper application, the manufacture of the support.

The external transmission of the data is mainly defined by the design of the primary antenna of the coupling unit. On the other hand, the identification of the article is achieved uniquely by the chip on the article. In the present invention, any marked article, as long as it is adapted to the accommodation position of the support, can be interchangeably accommodated in any position on the support, and can then be read by an external reader. In this sense, a support according to the invention is re-usable with an infinity of articles each marked with a unique identification tag. At the same time, as it contains no integrated circuit or such relatively sensitive elements, the support is robust and can be handled without special precaution. The coupling unit is preferably integrally buried in the structure of the support and thus protected against the external environment. This is a important advantage in comparison to systems with direct electrical contacts (inside of clips for example), that can be corroded or damaged with time.

In one particularly preferred embodiment of the invention, the primary antenna is a UHF antenna type, for example a dipole type antenna, allowing an extended readability range. For example the combination of coil-on-chip transponder on the article and a UHF type coupling unit on the support will provide an ideal complementarity in term of miniaturization and RFID performances.

A further advantage of the invention is to propose fixing means for each accommodation position. The articles are removably and interchangeably accommodated in the accommodation position of the support. But at the same time, inductive coupling implies quite strong constraints regarding the relative positioning of the secondary antenna of the coupling unit on the support and the antenna of the transponder mounted on the article. The inductive coupling systems of the prior art describes at least three parameters influencing the quality of the coupling:
- the distance between the secondary antenna and the antenna of the transponder: the nearer, the better.
- the relative design of both antennas: the more similar, the better.
- the material separating the two antenna: plastic is better than metal, but magnetic material is even better (to conduct the magnetic flux).
All these parameters are interdependent, but the most critical one is the distance. No system of the prior art shows a distance of more than some millimeters. In the case of the present invention, that means that the positioning of the article in the accommodation position has to be secured with an accurate precision. A tolerance of about 1 millimeter in the distance between the secondary antenna and the antenna of the transponder (being at maximum of only some millimeters) is regarded as being accurate in the present case. Many fixing mean of the art, like clipping means, can assure such tolerance, a condition being that they must allow a removable accommodation of the article.

In one other embodiment of the invention, a magnetic material, preferably sheet-like, is positioned between the secondary antenna of the coupling unit and the antenna of the transponder. It aims to conduct the electromagnetic flux and to improve the coupling. A sheet of magnetic material can be mounted on the support or on the article, or even on both for example.

In one particularly preferred embodiment of the invention, the support comprises a plurality of accommodation position and a plurality of corresponding primary antennas, wherein each primary antenna is configured to have different electromagnetic characteristics than the other primary antennas on said support. This means that each primary antenna has a slightly different design, its length for example, in order to show unique electromagnetic characteristics, in particular its resonance frequency. An example of such multiple design is given in the application FR 28 78 053. This allow a RFID reader, by discriminating against the different resonance frequency for example, to be able to identify which coupling unit on the support is actually "in communication". By programming the reader for the use of a given support, these will allow the system to identify in which accommodating position on the support an article is present.

### Detailed description of the invention

The invention will be better understood in the text below together with the following drawings:
Figure 1 shows a schematic representation of an embodiment of the invention with articles accommodated in a support.
Figure 2 shows a representation of the support according to figure 1, with details represented in transparency.
Figure 3 shows a a top view of figure 2, a possible arrangement of coupling units in a support according to the invention.
Figure 4 shows in cross-section the lower part of an article as shown on figure 1
Figure 5 shows in cross-section the way the article and the support of figure 1 are accommodated together.
Figure 6 shows the schematic representation of one possible design according to the invention for an inductive coupling unit in interaction with a transponder.

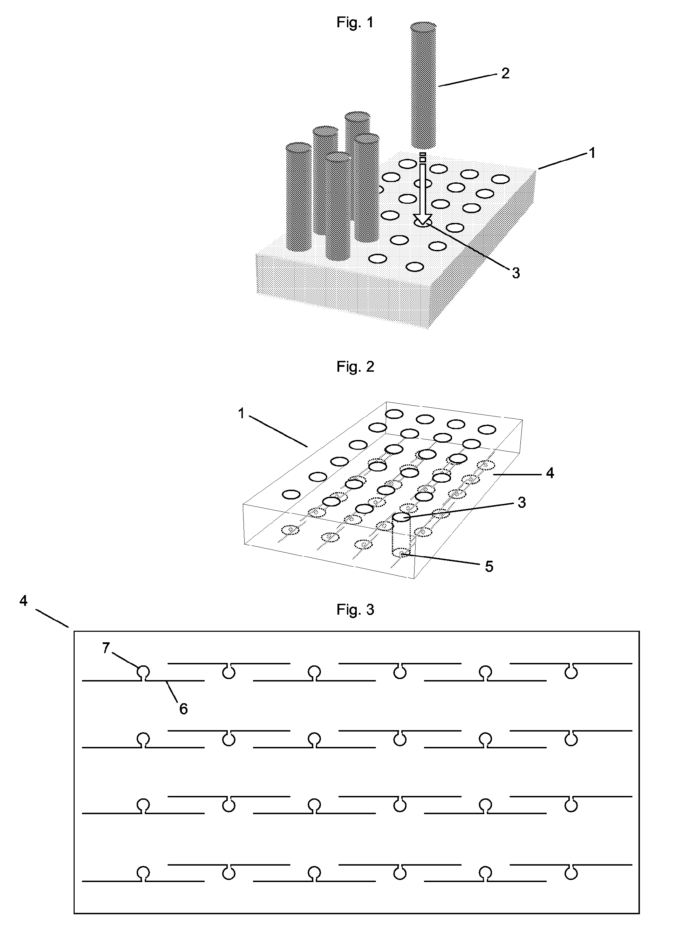

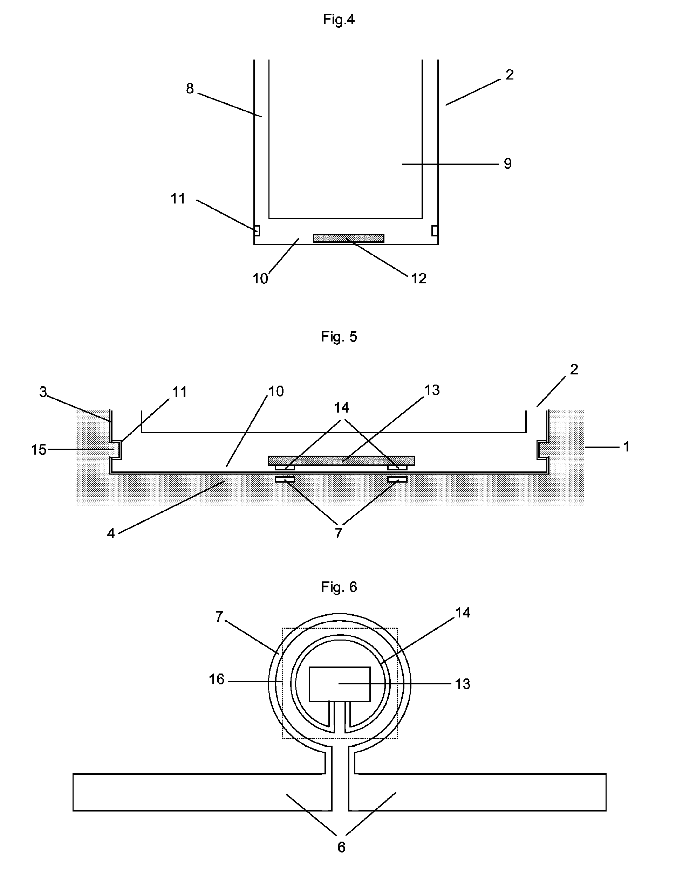

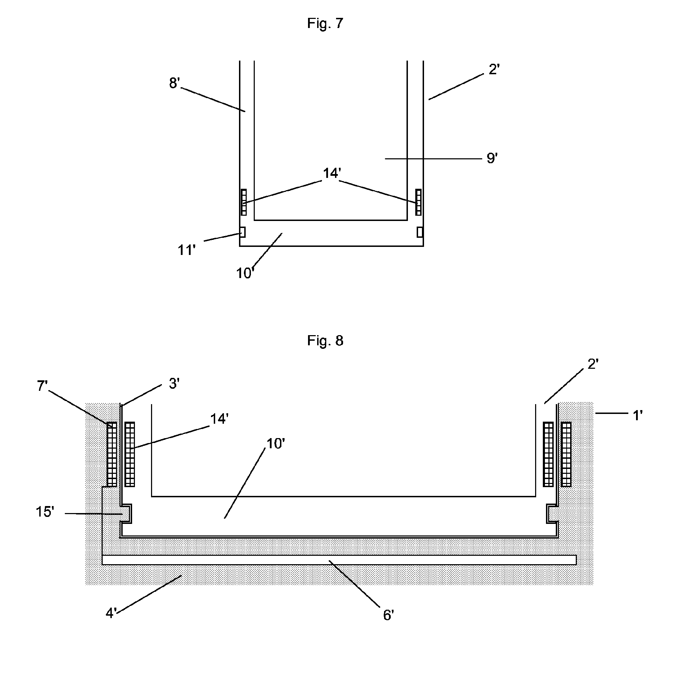

Figures 7 and 8 correspond to the views of figures 4 and 5 but illustrate a second embodiment of the invention. Figure 1 illustrates a schematic embodiment of the invention in which articles 2, such as test tubes or containers, are accommodated in a support 1. To this aim, the support 1 comprises several accommodation positions 3, schematically represented as cylindrical holes, in which the articles 2 are introduced. As will be readily understood by somebody skilled in the art, the number of accommodation positions for the articles can vary from one to several, depending on the relative sizes of articles and supports or the application.

As represented in figure 1, the articles 2 may be removably inserted in the accommodation positions 3.

In figure 2, the support 1 is illustrated in transparency a representation that allows to better understand the relative position of the elements forming the invention. One sees in particular the bottom 4 of the support, on which the inductive coupling units 5 are placed. More specifically, as represented in figure 3 which illustrates the bottom 4 of the support, the inductive coupling units 5 comprise a primary antenna 6 and a secondary antenna 7. The primary antenna 6 is used for communication with an external reader (not shown) as in usual in the art of RFID and the secondary antenna 7 is inductive coupled with the antenna of the RFID tag present on the article 2.

The configuration represented here, with several coupling units 5 arranged on a flat surface 4 of the support 1, is one of the most favorable for the mass production of such supports. The bottom surface 4 is ideally manufactured separately, as a flat plastic support surface (for example of PVC) on which the coupling units are reported. In such a configuration, most of the antennas manufacture techniques of the prior art (printing, etching, wire embedding, fixing, ...) can be used to produce the coupling unit. The single restriction given by the structure of the support 1 is the localization of the secondary antennas, which is defined partially by the position and the structure of the accommodating positions 3. Once the support surface 4 with its coupling units has been manufactured, it can be easily integrated in the support structure 1. Preferably, in the end, the coupling units have to be entirely buried in the support material (1,4), in order to be protected against the external environment.

The design of the coupling units 5 given in figure 3 is only a schematic example and has not to be interpreted as a restriction of the scope of the invention. As said above, almost all configurations of primary and secondary antennas are suitable. In particular, the design of the primary antennas 6 is restricted almost only by the available space available on the support 1, respectively on the support surface 4, taking account of the readability by an external reader and avoiding interactions with the other coupling units on the support. In a particular embodiment already cited above, each primary antenna has a different design, in order to allow the reader to discriminate between each coupling units.

In figure 4, an article such as a container or a test tube 2 is schematically represented. This article 2 comprises a side wall 8, a cavity 9 and a bottom 10. Schematically represented in this figure, in the bottom 10 is the transponder 12 (for example a RFID tag) and in the side walls 8, are container fixing means 11. Said fixing means 11 allow a proper positioning of the article 1 in the accommodation position 3.

Figure 5 shows in a more detailed manner an article 2 accommodated in an accommodation position 3 of a support 1. To maintain a proper positioning of said article 2 in the position 3, complementary positioning means 11 and 15 are provided on the article 2 and in the position 3. This figure 5 shows said means in the shape of a ring/notch arrangement by way of example but other equivalent means can be envisaged. Here, the bottom 4 of the support 1 shows a complex structure with recesses, walls and excrescences, defining the bottom end of the recess 3 and the fixing means 15. An alternative is to use the upper part of the structure of the support 1 to guide and fix the article to be accommodated. In case of a rack to accommodate a plurality of test tubes, the upper part of the support 1 is made for example of an empty volume defined by thin rods, lathes or plates separating the accommodation positions, and on which the fixing means 15 can be mounted. In such a case, the bottom surface 4 can be keep flat without specific fixing means.

Once the article 2 is properly accommodated with its bottom 10 next to the bottom 4 of the support 1, the transponder which comprises a chip or module 13 and an antenna 14 is in such a position that the antenna 14 is inductive coupled with the secondary antenna 7 of the coupling unit. In this example, the transponder antenna is directly mounted on the chip/module structure 13, imaging a coil-on-chip solution. The antenna 14 and the secondary antenna 7 are both entirely buried respectively in the bottom 10 of the test tube 2 and in the bottom 4 of the support. Depending on the configuration of the antennas and on the embedding materials, the distance between the two antennas 7 and 14 should not exceed several millimeters for a proper coupling.

A top view illustrating the relative position of the antennas of figure 5 is represented in figure 6. In this embodiment, the primary antenna 6 is a dipole and the secondary antenna 5 is a single open loop, which are connected in series and positioned in the same plane. On another plane (some millimeters higher for example), the transponder chip 13 is connected to the transponder antenna 14 that is also configured as a single open loop. Both antennas 7 and 14 have different diameters, but are concentrically positioned in two close parallel planes.

One has also represented with dotted lines a sheet of magnetic material 16 that is used to increase the magnetic coupling. The magnetic material of the sheet 16 is preferably an amorphous magnetic material with an extremely high specific magnetic permeability ranging from several ten thousands to several millions. For example, a sheet-like magnetic material of FE-NI-MO-B-S system being sold in the market by Allied Chemical Corporation (USA) has a specific magnetic permeability of 800 thousand. Such magnetic material can be used for the present invention when working at low frequency (123 kHz for example).

In figures 7 and 8, a second embodiment of the invention is illustrated. In this embodiment, the article 2' comprises a side wall 8', a cavity 9' and a bottom 10'. The main difference with the article 2 of the first embodiment resides in the position of the antenna 14' of the transponder which is wound around an external surface of the article 2' rather than being in (or on) the bottom, as represented in figure 4. This different geometry means that the secondary antenna 7' for the inductive coupling also has to be placed in a different location in the support. This different arrangement is represented in figure 8, in which the secondary antenna 7' is placed around the accommodating position 3' of the support 1'. The primary antenna 6' is for example placed in the bottom 4' of the support 1', as represented.

In this embodiment, it is also preferred to use positioning means 11', 15' similar to the positioning means 11, 15 of the first embodiment in order to maintain the article 1' in a proper position.

Although the invention has been shown and described with respect to certain preferred embodiments, it is obvious that equivalent alterations and modifications may be envisaged by other skilled in the art upon the reading and the understanding of this specification and the annexed drawings.

In particular, the terms "article" and "support" are intended to correspond to any element which performs equivalent functions of the described element. The support can be a movable or fixed presentation support for products. It can be a shelf in a shop for example. Many other embodiments and variations can be imagined in domain as various as shipping, stock management, logistic, anti-theft devices, ....

There is no particular limitations in the art and the geometry how the transponder is mounted on the article, and how the corresponding coupling unit is integrated in the support. For example, depending on the particular application (as type of articles and supports) the transponder can be mounted on the bottom, on the top or on the side of the article. In case of crates, the coupling units can also be enclosed in a side wall for example. In the same way as the structure of a support has to be in adapted to accommodate an article, the coupling unit and the transponder have just to be adapted to be inductive coupled when the article is correctly accommodated on the support.

It will be appreciate too that a variety of support configurations should be foreseen to be used with the same articles type. For example, on one hand a support showing a plurality of accommodation positions could be used for shipping and stocking a plurality of articles together, as on the other hand a support showing a single accommodating position is used to manipulate each article individually. Both support (multiple or single) show the same accommodating means and structure, and compatible coupling units. The use of individual "support-to-read" would be appreciate in many applications.

### List of numerical references :

- 1,1': container support
- 2,2': container
- 3,3': accommodation position
- 4,4': bottom of the container support
- 5: inductive coupling unit
- 6,6': primary antenna of the coupling unit
- 7,7': secondary antenna of the coupling unit
- 8,8': side wall of container shell
- 9,9': container cavity
- 10,10': bottom of container shell
- 11,11': container fixing means
- 12: transponder
- 13: chip or module
- 14,14': antenna of the transponder
- 15,15': support fixing means
- 16: magnetic material

## Claims

1. Support (1) with a least one accommodation position (3) for removably accommodating an article (2) marked with a transponder (12) comprising a transponder chip (13) and an antenna (14) electrically connected to the chip, wherein each accommodation position comprises an inductive coupling unit (5) with a primary antenna (6) and a secondary antenna (7) connected in series and wherein the secondary antenna (7) is configured such that, when the accommodation position is accommodated with an article, the secondary antenna (7) is inductive coupled with the antenna (14) of the transponder.

2. Support according to claim 1, being a crate or a rack for accommodating one or several containers, preferably vials or a test tubes, as articles.

3. Support according to any one of the previous claims, wherein the primary antenna (6) is a UHF type antenna, preferably a dipole type antenna.

4. Support according to any one of the previous claims, wherein each accommodation position comprises fixing means (15), preferably clipping means, to ensure a proper positioning of said article in said accommodating position in order to allow a proper and continuous inductive coupling between the secondary antenna (7) of the inductive coupling unit (5) and the antenna (14) of the transponder.

5. Support according to any one of the previous claims, wherein a magnetic material (16) is fixed near each secondary antenna (7) in order to increase the inductive coupling between said secondary antenna (7) and the corresponding antenna (14) of the transponder.

6. Support according to any one of the previous claims, comprising a plurality of accommodation positions (3) and a plurality of corresponding primary antennas (6), wherein each primary antenna (6) is configured with different electromagnetic characteristics.

7. Article to be removably accommodated in a support according to any one of the previous claims, said article being marked with a transponder (12) comprising a transponder chip (13) and an antenna (14) electrically connected to the chip, wherein the antenna (14) of the transponder is configured such that, when the article is accommodated in an accommodating position, the antenna (14) of the transponder is inductive coupled with the secondary antenna (7) of the inductive coupling unit (5) of said accommodation position.

8. Article according to claim 7, being a container, preferably a vial or a test tube.

9. Article according to one of claims 7 to 8, wherein the transponder (12) is of the type coil-on-chip.

10. Article according to one of claims 7 to 9, wherein it comprises fixing means, preferably clipping means, to ensure the proper positioning of said article in said accommodating position in order to allow a proper and continuous inductive coupling between the secondary antenna (7) of the inductive coupling unit (5) of said accommodation position and the antenna (14) of the transponder.

11. Article according to one of claims 7 to 10, wherein a magnetic material (16) is fixed near of the antenna (14) of the transponder in order to increase the inductive coupling between the said antenna (14) of the transponder and a corresponding secondary antenna (7) on said support.

12. A combination of a support as defined in one of claims 1 to 6 with at least one article as defined in one of claims 7 to 11.
